# FASCICULE DE BREVET EUROPEEN

(11) **EP 4 182 601 B1**
(45) Date de publication et mention de la délivrance du brevet: **06.08.2025**
(21) Numéro de dépôt: 21734813.5
(22) Date de dépôt: 21.06.2021
(51) Int. Cl.: F17C 13/08

(54) **DISPOSITIF DE STOCKAGE DE FLUIDE CRYOGÉNIQUE ET VÉHICULE COMPRENANT UN TEL DISPOSITIF**
VORRICHTUNG ZUR SPEICHERUNG VON KRYOGENEM FLUID UND FAHRZEUG MIT SOLCH EINER VORRICHTUNG
DEVICE FOR STORING CRYOGENIC FLUID AND VEHICLE COMPRISING SUCH A DEVICE

(30) Priorité: 16.07.2020 FR 2007456
(43) Date de publication de la demande: 24.05.2023
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: FAYER, Thomas, 38360 SASSENAGE (FR)
(74) Mandataire: Air Liquide
(86) Numéro de dépôt international: PCT/EP2021/066764
(87) Numéro de publication internationale: WO 2022/012867

(56) Documents cités:
- EP-A1- 3 452 751
- EP-B1- 3 452 751
- WO-A1-2005/100210
- FR-A1- 3 059 758
- US-A- 2 256 679
- US-A1- 2004 060 304
- US-A1- 2016 053 941
- US-B1- 9 944 452

## Description

L'invention concerne un dispositif de stockage de fluide cryogénique ainsi qu'un véhicule comprenant un tel dispositif.

L'invention concerne plus particulièrement un dispositif de stockage de fluide cryogénique comprenant une enveloppe interne étanche délimitant le volume de stockage pour le fluide cryogénique, une couche d'isolation thermique disposée autour de l'enveloppe interne et une enveloppe externe étanche disposées autour de la couche d'isolation, l'espace entre l'enveloppe interne et l'enveloppe externe étant sous vide

Pour permettre le déploiement de l'hydrogène carburant dans le secteur des transports, le stockage d'hydrogène liquéfié doit satisfaire à des contraintes de volume, forme, masse, tenue mécanique et coûts.

Les réservoirs isolés sous vide sont généralement massifs ont une forme cylindrique (pour des questions de tenue au vide).

Le document US2004060304A décrit une telle architecture de stockage cryogénique à relativement haute pression. Classiquement, l'enveloppe extérieure est une enceinte de tenue au vide métallique qui doit tenir une forte contrainte mécanique (flambement) et a de ce fait une épaisseur adaptée pour cela. De plus, la structure interne est renforcée mécaniquement par des entretoises pour la tenue aux efforts de vide.

Un but de la présente invention est de pallier tout ou partie des inconvénients de l'art antérieur relevés ci-dessus.

### Le document US9944452B1 décrit une architecture de dispositif de stockage de fluide.

A cette fin, le dispositif selon l'invention, par ailleurs conforme à la définition générique qu'en donne le préambule ci-dessus, est essentiellement caractérisé en ce que l'enveloppe externe repose sur la périphérie de la couche d'isolation thermique, la couche d'isolation thermique comprenant un isolant du type « répondant à la pression » tel que « LRMLI » ou « HLI », le dispositif comprenant en outre une enveloppe de protection disposée autour de l'enveloppe externe, le dispositif comprenant au moins une pièce de supportage comprenant une extrémité reliée rigidement à l'enveloppe interne et une seconde extrémité reliée rigidement à l'enveloppe de protection de sorte que l'ensemble comprenant l'enveloppe interne, l'enveloppe externe et la couche d'isolation thermique sous vide est suspendu dans l'enveloppe de protection via la au moins une pièce.de supportage.

Par ailleurs, des modes de réalisation de l'invention peuvent comporter l'une ou plusieurs des caractéristiques suivantes :
- la au moins une pièce de supportage comprend un col tubulaire,
- le dispositif comporte deux pièces de supportage disposées respectivement à deux extrémités du dispositif,
- la couche d'isolation thermique est comprimée selon son épaisseur entre l'enveloppe interne et l'enveloppe externe,
- la couche d'isolation thermique est comprimée selon son épaisseur entre l'enveloppe interne et l'enveloppe externe,
- la couche d'isolation thermique est comprimée selon son épaisseur avec un effort compris entre 0,9 et 1,1 kgf/cm² et par exemple 1kgf/cm²,
- la couche d'isolation thermique est composée de couches anti-rayonnement par exemple en aluminium ou PET double face aluminisé et d'espaceurs de ces couches anti-rayonnement assurant une auto sustentation, par exemple les espaceurs comprennent une structure imprimée en 3D et/ou des pièces moulée notamment en plastique,
- l'enveloppe interne est constituée de l'un au moins parmi : inox, aluminium, inox du type 316L, 316Ti ou 304L, aluminium du type 2024, 2219, 5083, 6061, ou 7020,
- l'enveloppe interne a une épaisseur comprise entre 1 et 10mm, et de préférence entre 4 et 6mm,
- l'enveloppe externe est constituée de l'un au moins parmi : acier carbone, inox, aluminium, titane,
- l'enveloppe (4) externe a une épaisseur comprise entre 0,1 et 5mm et notamment entre 0,1 et 1mm,
- l'enveloppe de protection est constituée de l'un au moins parmi : Kevlar, fibres de carbone, fibres aramides, composite, acier, inox, aluminium, titane,
- la au moins une pièce de supportage comprend une pièce tubulaire comprenant une paroi formant au moins un aller-retour selon une direction longitudinale entre une première extrémité longitudinale fixée à l'enveloppe interne, par exemple par soudage, et une seconde extrémité longitudinale fixée à l'enveloppe de protection,
- la au moins une pièce de supportage comprend un ensemble de tirant(s) comprenant une extrémité reliée à l'enveloppe de protection,
- la au moins une pièce de supportage comprend au moins un anneau disposé autour de l'enveloppe interne et dont la périphérie est fixée à l'enveloppe de protection,
- le dispositif comprend une isolation thermique, par exemple en mousse disposée entre l'enveloppe externe et l'enveloppe de protection.

L'invention concerne également un véhicule comprenant un dispositif de stockage selon l'une quelconque des caractéristiques précédentes.

Selon une particularité possible : le véhicule comprend une structure munie d'un châssis ou ensemble de paroi(s), au moins une partie de l'enveloppe de protection étant constituée par le châssis ou ensemble de paroi(s) et/ou l'enveloppe de protection est solidarisée au châssis ou ensemble de paroi(s).

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe, schématique et partielle, illustrant un premier exemple de structure d'un dispositif de stockage selon l'invention,
[Fig. 2] représente une vue en coupe, schématique et partielle, illustrant un détail agrandi dudit dispositif précité,
[Fig. 3] représente une vue en coupe, schématique et partielle, illustrant un exemple de montage d'un tel dispositif,
[Fig. 4] représente une vue en coupe, schématique et partielle, illustrant un exemple d'intégration d'un tel montage du dispositif dans un premier véhicule,
[Fig. 5] représente une vue en coupe, schématique et partielle, illustrant un second exemple de structure d'un dispositif de stockage selon l'invention,
[Fig. 6] représente une vue en perspective, schématique et partielle, illustrant un troisième exemple de structure d'un dispositif de stockage selon l'invention,
[Fig. 7] représente une vue en coupe, schématique et partielle, du troisième exemple de structure d'un dispositif de stockage selon l'invention,
[Fig. 8] représente une vue en coupe, schématique et partielle, illustrant un autre exemple de montage d'un tel dispositif,
[Fig. 9] représente une vue en coupe, schématique et partielle, illustrant un autre exemple d'intégration d'un tel montage du dispositif dans un second véhicule.
[Fig. 10] représente une vue en coupe, schématique et partielle, illustrant encore un autre exemple d'intégration d'un tel montage du dispositif dans un second véhicule,
[Fig. 11] représente une vue en coupe longitudinale, schématique et partielle, illustrant un quatrième exemple de structure d'un dispositif de stockage selon l'invention,
[Fig. 12] représente une vue en coupe longitudinale agrandie d'un détail de la [Fig. 11],
[Fig. 13] représente une vue en coupe transversale, schématique et partielle, du dispositif de la [Fig. 11].

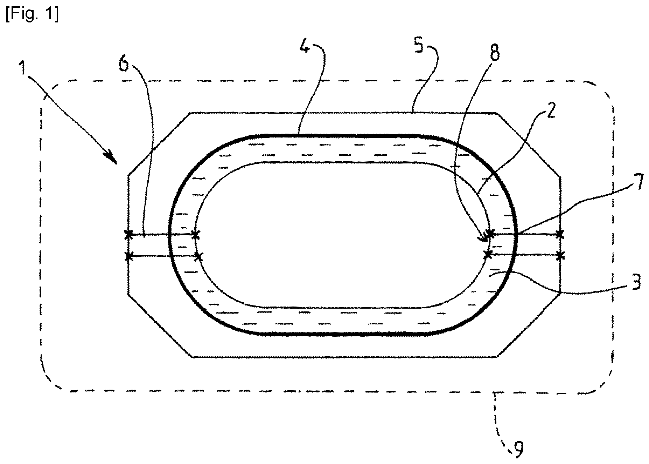

Le dispositif 1 de stockage de fluide cryogénique illustré notamment à la [Fig. 1] comprend une enveloppe 2 interne étanche délimitant le volume de stockage pour le fluide cryogénique.

L'enveloppe 2 interne peut être constituée, par exemple, de l'un au moins parmi : inox, aluminium, inox du type 316L, 316Ti ou 304L, aluminium du type 2024, 2219, 5083, 6061, ou 7020, ou tout autre alliage ou matériau composite compatible avec les températures cryogéniques. Cette enveloppe 2 interne a de préférence une épaisseur comprise entre 1 et 10mm, par exemple entre 4 et 6mm.

Le dispositif 1 comprend en outre une couche 3 d'isolation thermique disposée autour de l'enveloppe 2 interne et une enveloppe 4 externe étanche disposées autour de la couche 2 d'isolation. L'espace entre l'enveloppe 2 interne et l'enveloppe 4 externe est sous vide c'est-à-dire à une pression inférieure à la pression atmosphérique et notamment comprise entre 10⁻³ et 10⁻⁶ mbar.

L'enveloppe 4 externe repose (s'appuie) sur la périphérie de la couche 3 d'isolation thermique. Par exemple, la couche 3 d'isolation thermique est ainsi comprimée selon son épaisseur entre l'enveloppe 2 interne et l'enveloppe 4 externe. La couche 3 d'isolation thermique est par exemple comprimée selon son épaisseur avec un effort par exemple de l'ordre de 1kgf/cm2, par exemple 1,1 kgf/cm2 au niveau de la mer et une pression moindre en altitude (par exemple 0,2kgf/cm2 au-dessus de 10000m).

Par exemple, l'enveloppe 4 externe peut être constituée de l'un au moins parmi : acier carbone ou Inox, aluminium, liner polymère (par exemple PVC, PVDC, EVOH, PE ou autres polyoléfines). Cette enveloppe 4 externe a par exemple une épaisseur comprise entre 0,1mm et 1mm. Cette enveloppe 4 extérieure peut ainsi avoir par exemple une structure souple ou semi-rigide assurant l'étanchéité au vide et reposant sur l'isolation 3.

La couche 3 d'isolation thermique comprend un isolant du type « isolant multicouche répondant à la pression » tel que « LRMLI » (« Load Responsive Multi Layer Insulation »)» et/ou des isolations composites équivalentes utilisant ce genre de multicouches (additionné à une isolation poudre ou mousse par exemple).

Par exemple, la couche 3 d'isolation thermique peut être composée d'un multicouches isolant tels que ceux produits par la société Questhermal. Une telle isolation a par exemple la structure suivante : une superposition de couches types (isolantes) avec maintien dynamique de charge (structure de type « ressort » tenant un effort de compression de 1kgf/cm2) et de couches anti-rayonnement (feuille d'aluminium par exemple). Par exemple des couches de Mylar séparées par des espaceurs en polymère, cf publication « Integrated and load Responsive Multi layer insulation » de S.A Dye, Kopelove, Mills Cryogenics Vol. 52 April- June 2012. La différence avec les isolations MLI classiques (Multi layer Insulation »), réside dans la capacité de la couche isolante (à « ressort ») à maintenir les couches anti-rayonnement espacées (d'une distance entre 0.5mm et 3mm, par exemple 1.5mm, malgré une contrainte d'écrasement de 1kgf/cm2 (via la mémoire de forme).

Ce type d'isolation (LRMLI notamment) possède des performances thermiques qui peuvent être légèrement inférieures à celles des multicouches classiques (MLI) mais ont l'avantage de pouvoir tenir des efforts mécaniques plus importants, par exemple jusqu' à l kgf/cm2. Ceci permet de renvoyer les contraintes mécaniques de mise sous vide de l'enveloppe 2 interne directement sur l'isolation.

La couche 3 d'isolation a par exemple une épaisseur comprise entre 0.5 et quelques centimètres, par exemple un centimètre (typiquement 1 à 2 cm pour de petits réservoirs et jusqu'à 5 à 10 cm pour des réservoirs les plus gros tels que pour des trailers).

Le dispositif 1 comprenant en outre une enveloppe 5 de protection disposée autour de l'enveloppe 4 externe. Le dispositif 1 comprend en outre nt au moins une pièce 6, 7 de supportage comprenant une extrémité reliée rigidement à l'enveloppe 2 interne et une seconde extrémité reliée rigidement à l'enveloppe 5 de protection. Ainsi, l'ensemble comprenant l'enveloppe 2 interne, l'enveloppe 4 externe et la couche 3 d'isolation thermique est suspendu dans l'enveloppe 5 de protection via la au moins une pièce 6, 7 de supportage.

L'enveloppe 5 de protection peut être constituée, par exemple, de l'un au moins parmi : Kevlar, fibres de carbone, fibre synthétique aramide (par exemple, Nomex^{®}), composite, acier, inox, aluminium, titane.

L'enveloppe 5 de protection est de préférence rigide et peut être de forme cylindrique ou de toute autre forme.

Comme schématisé, l'enveloppe 2 interne et l'enveloppe 4 externe comprennent des orifices 8 respectifs de passage de circuiterie adjacents. La au moins une pièce 6, 7 de supportage comprend par exemple un col tubulaire disposé au niveau desdits orifices 8 alignés.

Bien entendu, cet agencement n'est pas limitatif, les tuyauteries pourraient passer en dehors du col.

Ce type nouveau d'isolation utilisé dans l'invention n'était pas envisagé dans ces applications en raison de ses performances thermiques relatives et également en raison de sa masse relative et sa robustesse moindre dans les architectures sous vide connues.

Ces inconvénients sont au moins en partie surmontés par l'architecture précitée. Ainsi, le problème de robustesse est surmonté en intégrant la structure dans une enveloppe 5 de protection constituée d'un matériau léger et résistant ou directement d'intégrer l'ensemble à l'enveloppe de protection (structure 5 métallique d'un véhicule par exemple comme décrit plus en détail ci-dessous). Cette enveloppe 5 de protection peut faire partie de la structure du véhicule qui intègre le dispositif 1 (châssis, coque, fuselage/aile), protection moteur, pare chocs, cale de bateau, ...). Cette enveloppe 5 de protection peut comprendre une couche en Kevlar ou fibre de carbone avant d'être intégrée à la structure qui l'abrite (en aluminium ou en acier par exemple).

Cette configuration permet de limiter les contraintes mécaniques de l'enveloppe 4 externe et/ou structurelle grâce à la structure dans laquelle la couche 3 d'isolation thermique est « auto-sustentée ».

Cette architecture permet également de s'affranchir de la forme cylindrique quasiment systématiquement nécessaire pour les structures selon l'art antérieur (ou permet d'optimiser la masse de réservoirs de forme cylindrique).

En dissociant ainsi la fonction d'isolation et l'enveloppe 5 de protection du stockage, il est également possible d'adapter l'épaisseur de l'enveloppe 4 externe en fonction de l'application (sol, maritime, aérien, civil, militaire...) ou de sa position dans le véhicule qui intègre le dispositif (partie exposée aux agressions extérieures ou non).

Une isolation (en mousse ou autre) intermédiaire peut également être intégrée le cas échéant entre l'enveloppe 4 externe et l'enveloppe 5 de protection, pour limiter les conséquences d'une perte de vide accidentelle.

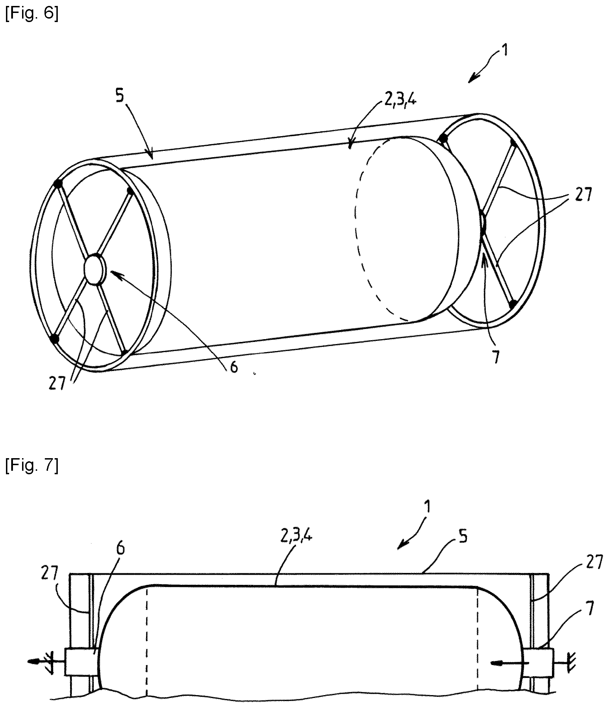

Comme illustré dans les exemples des [Fig. 1] à [Fig. 7], le dispositif 1 peut comporter deux pièces 6, 7 de supportages disposées respectivement à deux extrémités, par exemple deux extrémités longitudinales (en particulier lorsque le dispositif a une forme cylindrique).

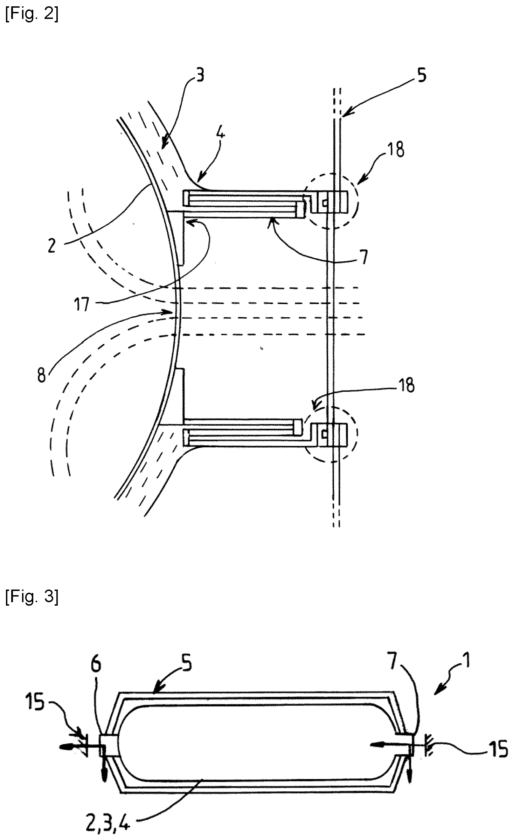

Comme illustré à la [Fig. 2], les pièces 6, 7 de supportage peuvent comprendre chacune une pièce tubulaire comprenant une paroi formant au moins un aller-retour selon une direction longitudinale entre une première extrémité 17 longitudinale fixée à l'enveloppe 2 interne, par exemple par soudage, et une seconde extrémité 18 longitudinale fixée à l'enveloppe (5) de protection par vissage ou soudage (avec serrage et interposition de joint(s) d'étanchéité le cas échéant). Cette structure avec « aller-retour » de parois selon la direction longitudinale est prévue pour allonger le chemin thermique entre les deux extrémités fixées à des éléments à des températures distinctes.

Bien entendu, cette structure n'est pas limitative, ainsi des formes plus simples (sans « aller-retour ») peuvent aussi être envisagées, par exemple avec des cols en titane.

Le dispositif 1 peut contenir tout fluide cryogénique, notamment de l'hydrogène liquéfié.

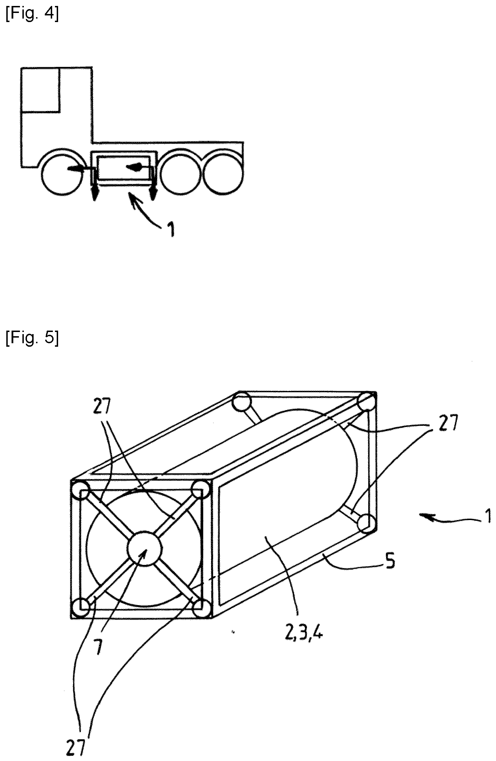

Comme illustré à la [Fig. 3], le dispositif peut être monté par ses deux extrémités longitudinales 6, 7 à un support 15, par exemple d'un véhicule (par exemple roulant cf. [Fig. 4]). Les deux extrémités peuvent ainsi reprendre les efforts longitudinaux et transversaux (symbolisés par les flèches).

Dans l'exemple de la [Fig. 5], les pièces 6, 7 de supportage comportent des tirants reliant la pièce tubulaire (reliée aux enveloppes 2, 4) à un cadre 5 extérieur. Le cadre 5 comprend par exemple un cadre de tiges mécano-soudé qui peut être attaché à une structure de véhicule ou faisant déjà partie de la structure du véhicule.

Dans l'exemple de la [Fig. 6], les pièces 6, 7 de supportage comportent des tirants reliant la pièce tubulaire (col(s) reliés aux enveloppes 2, 4) à un cadre 5 extérieur tubulaire. Le cadre 5 comprend par exemple un tube faisant partie du châssis d'un véhicule. Par exemple, les tirants 27 transversaux relient les cols des enveloppes à des anneaux solidaires du châssis 5.

Comme schématisé à la [Fig. 7], ceci permet de reprendre les efforts longitudinaux et transversaux.

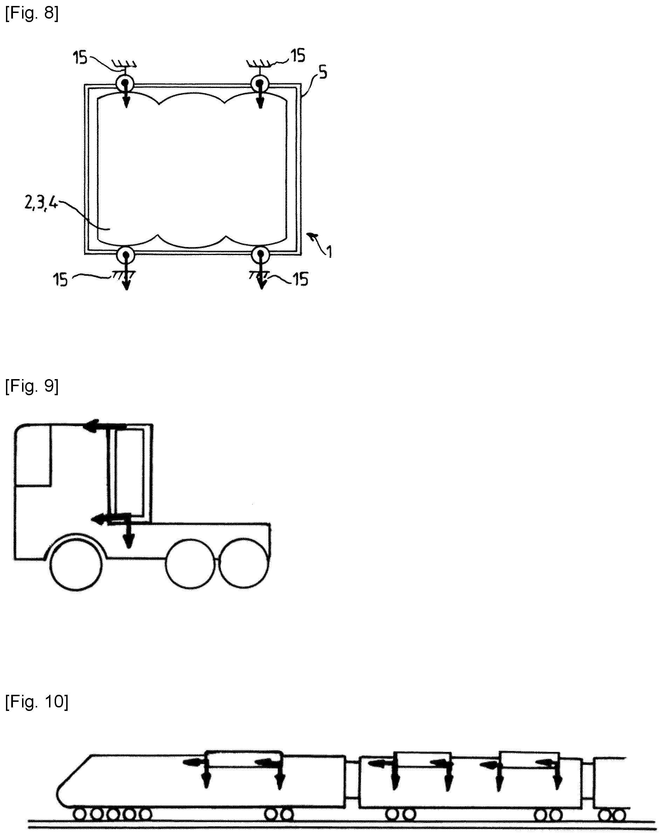

Dans l'exemple de la [Fig. 8], les enveloppes 2, 4 ont une forme plane (forme générale parallélépipédique), le stockage est logé dans une enveloppe 5 de protection ou carter de forme complémentaire qui peut être attaché à une structure15 extérieure au niveau de plusieurs points (par exemple quatre). Cet ensemble peut être monté verticalement (cf. [Fig. 9]), ou horizontalement (cf. [Fig. 10]) dans un véhicule. Comme précédemment les efforts longitudinaux et transversaux sont repris (symbolisés par des flèches).

Ainsi, l'architecture du dispositif permet une intégration optimisée dans un véhicule.

Cette solution est plus avantageuse que les réservoirs de l'art antérieur qui utilisaient la structure du véhicule comme enveloppe sous vide car ces solutions connues cumulent des contraintes mécaniques au niveau de l'enveloppe extérieur.

La solution proposée permet plus facilement de réaliser des réservoirs de formes parallélépipédique ou ayant une masse optimisée.

Optionnellement, il peut être prévu un cloisonnage des sections sous vide pour limiter les conséquences en cas de perte de vide accidentel.

Un gain en masse supplémentaire peut être obtenu via l'utilisation de raidisseur(s) à l'intérieur de l'enveloppe 2 interne (en particulier si le réservoir est plat).

Le choix du matériau constitutif de l'enveloppe 5 de protection peut aussi être déterminé pour conférer au dispositif une ou des caractéristiques supplémentaires (tenue au feu, anti-UV, anticorrosion, antistatique...).

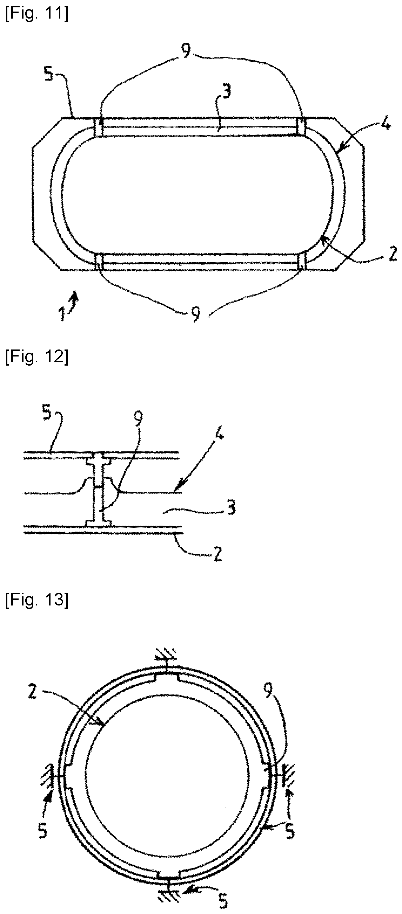

Les [Fig. 11], [Fig. 12] et [Fig. 13] représente une autre variante de réalisation de la ou des pièces de supportage. Dans cet exemple, la moins une pièce de supportage comprend deux anneaux 19 disposé (fixés) autour de l'enveloppe 2 interne et dont les périphéries sont fixées à l'enveloppe 5 de protection. Ce ou ces anneaux 19 peuvent être prévus alternativement (o cumulativement le cas échant) au col(s) 6, 7de supportage. Comme visible à la [Fig. 13], la périphérie de cas anneaux 9 peut être fixée en plusieurs points à l'enveloppe 5 de protection.

Ces anneaux peuvent être composés de l'un au moins parmi : de l'époxy, de l'aluminium, de l'inox, un métal. Ces anneaux peuvent avoir des formes complexes pour allonger le chemin thermique entre les deux enveloppes 2, 5.

Le cas échéant au moins une partie de la tuyauterie pourrait passer par un anneau 9, par exemple en décrivant un tour autour de la périphérie de l'enveloppe 2 interne.

## Revendications

1. Dispositif de stockage de fluide cryogénique comprenant une enveloppe (2) interne étanche délimitant le volume de stockage pour le fluide cryogénique, une couche (3) d'isolation thermique disposée autour de l'enveloppe (2) interne et une enveloppe (4) externe étanche disposées autour de la couche (2) d'isolation, l'espace entre l'enveloppe (2) interne et l'enveloppe (4) externe étant sous vide, l'enveloppe (4) externe reposant sur la périphérie de la couche (3) d'isolation thermique, la couche (3) d'isolation thermique comprenant un isolant du type « répondant à la pression » tel que « LRMLI » (« Load Responsive Multi Layer Insulation»), le dispositif (1) comprenant en outre une enveloppe (5) de protection disposée autour de de l'enveloppe (4) externe, le dispositif (1) comprenant au moins une pièce (6, 7, 9) de supportage comprenant une extrémité reliée rigidement à l'enveloppe (2) interne et une seconde extrémité reliée rigidement à l'enveloppe (5) de protection de sorte que l'ensemble comprenant l'enveloppe (2) interne, l'enveloppe (4) externe et la couche (3) d'isolation thermique sous vide est suspendu dans l'enveloppe (5) de protection via la au moins une pièce (6, 7, 9) de supportage.

2. Dispositif selon la revendication 1, **caractérisé en ce que** la au moins une pièce (6, 7) de supportage comprend un col tubulaire.

3. Dispositif selon la revendication 1 ou 2, **caractérisé en ce qu'**il comporte deux pièces (6, 7) de supportage disposées respectivement à deux extrémités du dispositif (1).

4. Dispositif selon l'une quelconque des revendication 1 à 3, **caractérisé en ce que** la couche (3) d'isolation thermique est comprimée selon son épaisseur entre l'enveloppe (2) interne et l'enveloppe (4) externe.

5. Dispositif selon l'une quelconque des revendications 1 à 4, **caractérisé en ce que** la couche (3) d'isolation thermique est comprimée selon son épaisseur avec un effort compris entre 0,9 et 1,1 kgf/cm² et par exemple 1kgf/cm².

6. Dispositif selon l'une quelconque des revendications 1 à 5, **caractérisé en ce que** l'espace sous vide entre l'enveloppe (2) interne et l'enveloppe (4) externe est formé de plusieurs sous-volume cloisonnés sous-vide indépendants les uns des autres.

7. Dispositif selon l'une quelconque des revendications 1 à 6, **caractérisé en ce que** la couche (3) d'isolation thermique est composée de couches anti-rayonnement par exemple en aluminium ou PET double face aluminisé et d'espaceurs de ces couches anti-rayonnement assurant une auto sustentation, par exemple les espaceurs comprennent une structure imprimée en 3D et/ou des pièces moulée notamment en plastique.

8. Dispositif selon l'une quelconque des revendications 1 à 7, **caractérisé en ce que** l'enveloppe (2) interne est constituée de l'un au moins parmi : inox, aluminium, inox du type 316L, 316Ti ou 304L, aluminium du type 2024, 2219, 5083, 6061, ou 7020.

9. Dispositif selon l'une quelconque des revendications 1 à 8, **caractérisé en ce que** l'enveloppe (2) interne a une épaisseur comprise entre 1 et 10mm, et de préférence entre 4 et 6mm.

10. Dispositif selon l'une quelconque des revendications 1 à 9, **caractérisé en ce que** l'enveloppe (4) externe est constituée de l'un au moins parmi : acier carbone, inox, aluminium, titane.

11. Dispositif selon l'une quelconque des revendications 1 à 10, **caractérisé en ce que** l'enveloppe (4) externe a une épaisseur comprise entre 0,1 et 5mm et notamment entre 0,1 et 1mm.

12. Dispositif selon l'une quelconque des revendications 1 à 11, **caractérisé en ce que** l'enveloppe (5) de protection est constituée de l'un au moins parmi : Kevlar, fibres de carbone, fibres aramides, composite, acier, inox, aluminium, titane.

13. Dispositif selon l'une quelconque des revendications 1 à 12, **caractérisé en ce que** la au moins une pièce (6, 7) de supportage comprend une pièce tubulaire comprenant une paroi formant au moins un aller-retour selon une direction longitudinale entre une première extrémité (17) longitudinale fixée à l'enveloppe (2) interne, par exemple par soudage, et une seconde extrémité (18) longitudinale fixée à l'enveloppe (5) de protection.

14. Dispositif selon l'une quelconque des revendications 1 à 13, **caractérisé en ce que** la au moins une pièce (6, 7, 9) de supportage comprend un ensemble de tirant(s) (27) comprenant une extrémité reliée à l'enveloppe (5) de protection.

15. Dispositif selon l'une quelconque des revendications 1 à 14, **caractérisé en ce que** la au moins une pièce (6, 7) de supportage comprend au moins un anneau (19) disposé autour de l'enveloppe (2) interne et dont la périphérie est fixée à l'enveloppe (5) de protection.

16. Dispositif selon l'une quelconque des revendications 1 à 15, **caractérisé en ce qu'**il comprend une isolation thermique, par exemple en mousse disposée entre l'enveloppe (4) externe et l'enveloppe (5) de protection.

17. Véhicule comprenant un dispositif de stockage selon l'une quelconque des revendications 1 à 16.

18. Véhicule selon la revendication 17, le véhicule comprenant une structure munie d'un châssis ou ensemble de paroi(s) (15), **caractérisé en ce que** au moins une partie de l'enveloppe (5) de protection est constituée par le châssis ou ensemble de paroi(s) (15) et/ou l'enveloppe (5) de protection est solidarisée au châssis ou ensemble de paroi(s) (15).

## Patentansprüche

1. Vorrichtung zur Speicherung von kryogenem Fluid, welche eine dichte innere Hülle (2), die das Speichervolumen für das kryogene Fluid begrenzt, eine Wärmeisolationsschicht (3), die um die innere Hülle (2) herum angeordnet ist, und eine dichte äußere Hülle (4), die um die Isolationsschicht (2) herum angeordnet ist, umfasst, wobei der Raum zwischen der inneren Hülle (2) und der äußeren Hülle (4) unter Vakuum steht, wobei die äußere Hülle (4) auf dem Umfang der Wärmeisolationsschicht (3) ruht, wobei die Wärmeisolationsschicht (3) ein Isoliermaterial vom "druckreaktiven" Typ wie etwa "LRMLI" ("Load Responsive Multi Layer Insulation") umfasst, wobei die Vorrichtung (1) außerdem eine Schutzhülle (5) umfasst, die um die äußere Hülle (4) herum angeordnet ist, wobei die Vorrichtung (1) mindestens ein Tragteil (6, 7, 9) umfasst, das ein mit der inneren Hülle (2) starr verbundenes Ende und ein mit der Schutzhülle (5) starr verbundenes zweites Ende umfasst, so dass die Anordnung, welche die innere Hülle (2), die äußere Hülle (4) und die unter Vakuum stehende Wärmeisolationsschicht (3) umfasst, über das mindestens eine Tragteil (6, 7, 9) in der Schutzhülle (5) aufgehängt ist.

2. Vorrichtung nach Anspruch 1, **dadurch gekennzeichnet, dass** das mindestens eine Tragteil (6, 7) einen rohrförmigen Hals umfasst.

3. Vorrichtung nach Anspruch 1 oder 2, **dadurch gekennzeichnet, dass** sie zwei Tragteile (6, 7) aufweist, die jeweils an einem von zwei Enden der Vorrichtung (1) angeordnet sind.

4. Vorrichtung nach einem der Ansprüche 1 bis 3, **dadurch gekennzeichnet, dass** die Wärmeisolationsschicht (3) zwischen der inneren Hülle (2) und der äußeren Hülle (4) in ihrer Dicke zusammengedrückt ist.

5. Vorrichtung nach einem der Ansprüche 1 bis 4, **dadurch gekennzeichnet, dass** die Wärmeisolationsschicht (3) in ihrer Dicke mit einer Kraft zwischen 0,9 und 1,1 kp/cm² und zum Beispiel 1 kp/cm² zusammengedrückt ist.

6. Vorrichtung nach einem der Ansprüche 1 bis 5, **dadurch gekennzeichnet, dass** der unter Vakuum stehende Raum zwischen der inneren Hülle (2) und der äußeren Hülle (4) von mehreren unter Vakuum stehenden, abgeschotteten Teilvolumina gebildet wird, die voneinander unabhängig sind.

7. Vorrichtung nach einem der Ansprüche 1 bis 6, **dadurch gekennzeichnet, dass** die Wärmeisolationsschicht (3) aus Anti-Strahlungs-Schichten besteht, zum Beispiel aus Aluminium oder beidseitig aluminisiertem PET, und aus Abstandhaltern für diese Anti-Strahlungs-Schichten, die einen Schwebezustand sicherstellen, wobei die Abstandhalter zum Beispiel eine 3D-gedruckte Struktur und/oder Formteile, insbesondere aus Kunststoff, umfassen.

8. Vorrichtung nach einem der Ansprüche 1 bis 7, **dadurch gekennzeichnet, dass** die innere Hülle (2) aus mindestens einem von Folgendem besteht: Edelstahl, Aluminium, Edelstahl vom Typ 316L, 316Ti oder 304L, Aluminium vom Typ 2024, 2219, 5083, 6061 oder 7020.

9. Vorrichtung nach einem der Ansprüche 1 bis 8, **dadurch gekennzeichnet, dass** die innere Hülle (2) eine Dicke zwischen 1 und 10 mm und vorzugsweise zwischen 4 und 6 mm aufweist.

10. Vorrichtung nach einem der Ansprüche 1 bis 9, **dadurch gekennzeichnet, dass** die äußere Hülle (4) aus mindestens einem von Folgendem besteht: Kohlenstoffstahl, Edelstahl, Aluminium, Titan.

11. Vorrichtung nach einem der Ansprüche 1 bis 10, **dadurch gekennzeichnet, dass** die äußere Hülle (4) eine Dicke zwischen 0,1 und 5 mm und insbesondere zwischen 0,1 und 1 mm aufweist.

12. Vorrichtung nach einem der Ansprüche 1 bis 11, **dadurch gekennzeichnet, dass** die Schutzhülle (5) aus mindestens einem von Folgendem besteht: Kevlar, Kohlefasern, Aramidfasern, Verbundwerkstoff, Stahl, Edelstahl, Aluminium, Titan.

13. Vorrichtung nach einem der Ansprüche 1 bis 12, **dadurch gekennzeichnet, dass** das mindestens eine Tragteil (6, 7) ein rohrförmiges Teil umfasst, das eine Wand umfasst, die eine sich mindestens einmal hin und zurück erstreckende Form in einer Längsrichtung zwischen einem ersten Längsende (17), das zum Beispiel durch Schweißen an der inneren Hülle (2) befestigt ist, und einem zweiten Längsende (18), das an der Schutzhülle (5) befestigt ist, aufweist.

14. Vorrichtung nach einem der Ansprüche 1 bis 13, **dadurch gekennzeichnet, dass** das mindestens eine Tragteil (6, 7, 9) eine Anordnung von einem oder mehreren Zuganker(n) (27) umfasst, die ein Ende umfassen, das mit der Schutzhülle (5) verbunden ist.

15. Vorrichtung nach einem der Ansprüche 1 bis 14, **dadurch gekennzeichnet, dass** das mindestens eine Tragteil (6, 7) mindestens einen Ring (19) umfasst, der um die innere Hülle (2) herum angeordnet ist und dessen Umfang an der Schutzhülle (5) befestigt ist.

16. Vorrichtung nach einem der Ansprüche 1 bis 15, **dadurch gekennzeichnet, dass** sie eine Wärmeisolierung umfasst, zum Beispiel aus Schaumstoff, die zwischen der äußeren Hülle (4) und der Schutzhülle (5) angeordnet ist.

17. Fahrzeug, welches eine Vorrichtung zur Speicherung nach einem der Ansprüche 1 bis 16 umfasst.

18. Fahrzeug nach Anspruch 17, wobei das Fahrzeug eine Struktur umfasst, die mit einem Fahrgestell oder einer Anordnung einer Wand (von Wänden) (15) ausgestattet ist, **dadurch gekennzeichnet, dass** wenigstens ein Teil der Schutzhülle (5) aus dem Fahrgestell oder der Anordnung einer Wand (von Wänden) (15) besteht und/oder die Schutzhülle (5) mit dem Fahrgestell oder der Anordnung einer Wand (von Wänden) (15) fest verbunden ist.

## Claims

1. Device for storing cryogenic fluid, comprising a sealed internal shell (2) delimiting the storage volume for the cryogenic fluid, a thermal insulation layer (3) disposed around the internal shell (2) and a sealed external shell (4) disposed around the insulation layer (2), the space between the internal shell (2) and the external shell (4) being under vacuum, the external shell (4) resting on the periphery of the thermal insulation layer (3), the thermal insulation layer (3) comprising an insulating material of the "pressure-responsive" type such as "LRMLI" ("Load Responsive Multi Layer Insulation"), the device (1) also comprising a protective shell (5) disposed around the external shell (4), the device (1) comprising at least one supporting component (6, 7, 9) comprising an end connected rigidly to the internal shell (2) and a second end rigidly connected to the protective shell (5) such that the assembly comprising the internal shell (2), the external shell (4) and the thermal insulation layer (3) under vacuum is suspended in the protective shell (5) via the at least one supporting component (6, 7, 9).

2. Device according to Claim 1, **characterized in that** the at least one supporting component (6, 7) comprises a tubular neck.

3. Device according to Claim 1 or 2, **characterized in that** it has two supporting components (6, 7) disposed respectively at two ends of the device (1).

4. Device according to any one of Claims 1 to 3, **characterized in that** the thermal insulation layer (3) is compressed in the direction of its thickness between the internal shell (2) and the external shell (4).

5. Device according to any one of Claims 1 to 4, **characterized in that** the thermal insulation layer (3) is compressed in the direction of its thickness by a load of between 0.9 and 1.1 kgf/cm² and for example 1 kgf/cm².

6. Device according to any one of Claims 1 to 5, **characterized in that** the space under vacuum between the internal shell (2) and the external shell (4) is formed by a plurality of mutually independent partitioned sub-volumes under vacuum.

7. Device according to any one of Claims 1 to 6, **characterized in that** the thermal insulation layer (3) is made up of radiation-impeding layers made for example from aluminium or double-sided aluminized PET and of spacers for these radiation-impeding layers, ensuring self-supporting, for example the spacers comprising a 3D printed structure and/or components moulded in particular from plastic.

8. Device according to any one of Claims 1 to 7, **characterized in that** the internal shell (2) is made of at least one of: stainless steel, aluminium, type 316L, 316Ti or 304L stainless steel, type 2024, 2219, 5083, 6061 or 7020 aluminium.

9. Device according to any one of Claims 1 to 8, **characterized in that** the internal shell (2) has a thickness of between 1 and 10 mm, and preferably between 4 and 6 mm.

10. Device according to any one of Claims 1 to 9, **characterized in that** the external shell (4) is made of at least one of: carbon steel, stainless steel, aluminium, titanium.

11. Device according to any one of Claims 1 to 10, **characterized in that** the external shell (4) has a thickness of between 0.1 and 5 mm and in particular between 0.1 and 1 mm.

12. Device according to any one of Claims 1 to 11, **characterized in that** the protective shell (5) is made of at least one of: Kevlar, carbon fibres, aramid fibres, composite, steel, stainless steel, aluminium, titanium.

13. Device according to any one of Claims 1 to 12, **characterized in that** the at least one supporting component (6, 7) comprises a tubular component comprising a wall forming at least one back-and-forth in a longitudinal direction between a first longitudinal end (17) fixed to the internal shell (2), for example by welding, and a second longitudinal end (18) fixed to the protective shell (5).

14. Device according to any one of Claims 1 to 13, **characterized in that** the at least one supporting component (6, 7, 9) comprises a set of tie rods (27) comprising an end connected to the protective shell (5).

15. Device according to any one of Claims 1 to 14, **characterized in that** the at least one supporting component (6, 7) comprises at least one ring (19) which is disposed around the internal shell (2) and the periphery of which is fixed to the protective shell (5).

16. Device according to any one of Claims 1 to 15, **characterized in that** it comprises a thermal insulation, for example made of foam disposed between the external shell (4) and the protective shell (5).

17. Vehicle comprising a storage device according to any one of Claims 1 to 16.

18. Vehicle according to Claim 17, the vehicle comprising a structure provided with a chassis or a set of walls (15), **characterized in that** at least a part of the protective shell (5) is formed by the chassis or set of walls (15) and/or the protective shell (5) is secured to the chassis or set of walls (15).
